# EUROPEAN PATENT SPECIFICATION

(11) **EP 3 375 301 B1**
(45) Date of publication and mention of the grant of the patent: **23.10.2019**
(21) Application number: 16863713.0
(22) Date of filing: 31.05.2016
(51) Int. Cl.: A23N 5/03, B67B 7/46, B67B 7/52

(54) **RING WITH FIXING AND SELF-RETAINING MEANS**
RING MIT BEFESTIGUNGS- UND SELBSTHALTEVORRICHTUNG
ANNEAU POURVU D'UN MOYEN DE FIXATION ET D'AUTO-RETENUE

(30) Priority: 13.11.2015 ES 201531250 U
(43) Date of publication of application: 19.09.2018
(73) Proprietor: World's Coconut Trading, S.L., 50011 Zaragoza (ES)
(72) Inventor: AMOROS LOPEZ, Carlos, 50011 Zaragoza (ES)
(74) Representative: Sahuquillo Huerta, Jesús
(86) International application number: PCT/ES2016/070409
(87) International publication number: WO 2017/081339

(56) References cited:
- WO-A1-2014/129984
- WO-A1-2014/129984
- ES-U- 1 115 606
- ES-U- 1 115 606
- US-A1- 2014 044 848
- US-A1- 2015 048 110
- US-A1- 2015 048 110

## Description

### Object of the invention

The present invention relates to a pull tab with fastening and self-retaining means, which contributes essential novel characteristics and notable advantages with respect to the means that are known and used forthe same purposes in the current state of the art.

More specifically, the invention proposes the development of a pull tab equipped with fastening and self-retaining means forthe application thereof when opening fruits with a hard shell, such as coconuts or equivalent fruits, only made with 100% organic, biodegradable material, such as coconut shells and natural resin. The pull tab of the invention is made from a single piece and the fastening and self-retaining means consists of a bolt housed in a through hole made in the body of the pull tab, which on one end includes a frustoconical portion, with a larger diameter, with divisions configured by means of clips, and on the opposite end it includes a flat head, with a larger diameter, made up of a maximum stop for inserting the bolt. Furthermore, the pull tab also incorporates anti-rotation means once positioned.

The field of application of the invention is comprised within the industrial sector dedicated to manufacturing and providing means for easily opening fruits such as coconuts or others with comparable natures.

### Background and summary of the invention

Opening fruit from the coconut tree is very desirable for the purpose of extracting the liquid contained inside of it, known as coconut water, which in many places is collected and packaged for the subsequent sale thereof, with great acceptance and growing demand as time passes. Coconut fruit is not only cultivated for the purpose of extracting the coconut water contained inside of it, but it also has many other applications in the state of the art, such as applications for obtaining and accompanying the preparation of many types of food products, such as coconut milk, coconut butter, coconut oil, rice with coconut, palm wine, shredded coconut, or even for the direct consumption thereof. In fact, the edible part of the fruit (called meat) is a nutritional source that includes carbohydrates; sugars; fibers; saturated, monounsaturated and polyunsaturated fats; proteins, vitamins and minerals.

However, the hardness of the shell generally causes the consumer to show certain reluctance when deciding whether to consume it. In order to handle a fresh coconut, the consumer must pierce the husk through a previously located softer area ('eyes_), using a piercing or cutting instrument to do so, such as for example a knife with a tip, the spiral end of a corkscrew, the end of a hard rod, a cross-head screwdriver, a drill bit and a drill, etc. Next, once the liquid has been extracted from the inside through the hole(s) made, it is necessary to hit the coconut with a blunt instrument, such as for example a hammer, along what could be considered the 'equator line_, causing a fracture that will continue to extend along the circumferential line until the coconut is divided into two half bodies with the subsequent blows. Afterwards, each of them can be taken out of the hard husk and the meat divided into pieces, portions or fragments of different sizes.

It is clearthatthe handling of fresh coconut, as mentioned previously, has certain drawbacks thatthe user must overcome. In fact, by means of the S panish utility model document ES1115606U from the same applicant, a 'device for manually opening fresh coconuts_ is already known, which describes a device made up of a pull tab that is fastened on a previously drilled position of the coconut husk by inserting of a metal rivet. However, although this device perfectly meets the objective for which it has been designed, the research and testing performed by the applicant have achieved certain improvements, which form the object of the present description and which enable the removal of any metal component by using only biodegradable organic material, which is much more environmentally friendly.

The document WO2014/129984 discloses an easy-to-open roasted or boiled aromatic coconut comprising a coconut from which the husk was removed until a clean shelled coconut is obtained and groove line on the shell of the coconut characterized in that said groove line is at least one converged groove line located at the bottom side of the shell of the coconut and that said groove line is made by laser engraving using a laser engraver. Easy-to-open roasted or boiled aromatic coconut further comprises an opening means fixed within one converged groove line, near the groove line. The document WO 2014/129984 also relates to the method for producing said easy-to-open roasted or boiled aromatic coconut which allows easy consumption.

Essentially, the device claimed in the present invention consists of a pull tab made up of coconut shell and natural resin, which is substantially flattened, with a wide pulling opening that affects at least half the surface thereof, in the pull tab body of which a through hole has been made on the end opposite from said opening. The hole of the pull tab houses a bolt with the possibility of movement, which on one end (the end to be coupled to the coconut) has a formation with a larger diameter and a frustoconical configuration with slots or cuts according to one or more diagonal plane directions, such that they determine portions or 'slices_made up of clips that behave elastically and serve as self-retaining means for the pull tab assembly once mounted on the coconut. The end of the bolt opposite from the frustoconical formation shows a substantially flat head, with a diameter larger than the body of the bolt, which constitutes a limit or stop to the insertion of the bolt into the coconut, as explained later on.

Thus, when the pull tab is to be coupled to the coconut for the subsequent opening thereof, a pre-cut area, i.e. an area delimited by a circular weakened line, is first made, preferably in one of the softer portions of the coconut shell (the already known eyes), and this pre-cut portion is pierced to coincide with the center thereof by means of a through hole having a diameter approximately equivalent to, or slightly greater than, the diameter of the body of the bolt, such that said bolt may be inserted through said through hole of the coconut shell by means of pressure by virtue of the elastic release of the portions that make up the frustoconical insertion end thereof with a larger diameter, and so that the elastic recovery of such portions, once housed inside the coconut, determine the fastening and self-retention of the pull tab. Under such circumstances, when the consumer pulls on the pull tab, the lever effect generated causes the pre-cut portion to break along the weakened line and with it the coconut is opened.

In the preferred embodiment, it is envisaged that the pull tab include anti-rotation means, consisting of a small protrusion projected from the surface of the face of the pull tab in contact with the coconut, which prevents the pull tab from rotating by itself from the coupling position thereof.

### Brief description of the drawings

These and other characteristics and advantages of the invention will be made clearer from the detailed description of a preferred exemplary embodiment thatfollows, which is only given by way of illustration and not limitation and refers to the drawings that accompany it, wherein:
Figure 1 shows a schematic perspective view from above of a pull tab equipped with fastening and self-retaining means according to the present invention;
Figure 2 shows a schematic perspective view from below of a pull tab of Figure 1 equipped with anti-rotation means;
Figure 3 is a schematic perspective view of a coconut prepared to receive the pull tab of Figures 1 and 2, and
Figure 4 illustrates a schematic perspective view of the pull tab of Figures 1 and 2 after the coupling thereof to the coconut of Figure 3.

### Description of a preferred embodiment

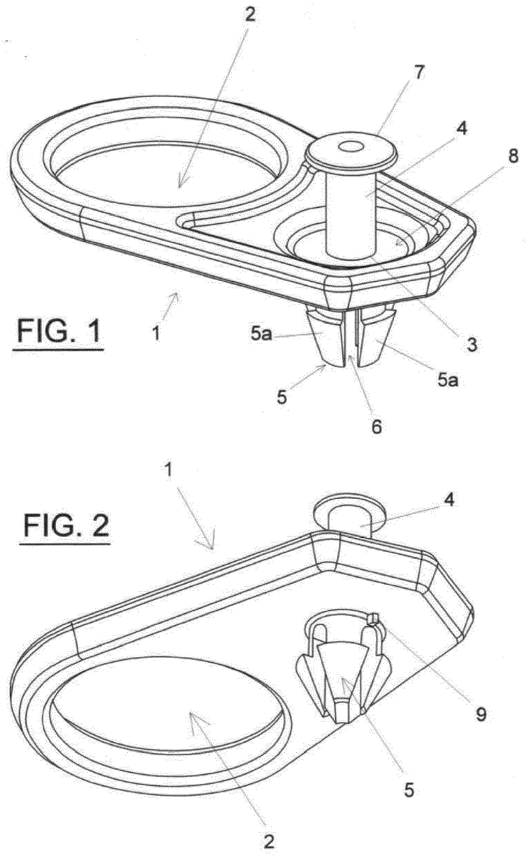

As mentioned previously, the detailed description of the preferred embodiment of the object of the invention will be provided below with the help of the attached drawings, throughout which the same numerical references are used to designate the same or equivalent parts. Thus, in reference to Figure 1, a schematic perspective view from above of a pull tab made from biodegradable materials (coconut shells and natural resins), made from a single, substantially flat piece, and generally indicated with the numerical reference 1, can be seen. As is conventional in quick-opening devices, the greater part of the surface of the pull tab 1 of the present invention is occupied by a circular opening 2 intended to provide a gripping and pulling area for the consumer, while a through hole 3 has been made in the body of the pull tab near the end opposite from said opening 2, intended to receive and house a cylindrical bolt 4 that has a frustoconical configuration 5 on one end (the end intended to be inserted inside the coconut), with a larger diameterthan the cylindrical body of the bolt 4, and with one or more slots 6 according to diametric planes, which give rise to the formation of portions 5a with behavior equivalent to that of elastic clips. Preferably, in a preferred embodiment, it has been envisaged that there are two diametric slots 6, perpendicular to each other, giving rise to the formation of four portions or 'slices_ 5a with elastic behavior as mentioned previously; however, it will be understood thatthis number of slots is only an illustrative example of an embodiment and that it could be any other number.

The bolt 4 includes, on the end opposite from the frustoconical formation 5, a substantially flat head 7, with a larger diameter than the cylindrical body of the bolt 4, which constitutes a stop element during the coupling of the pull tab 1 by insertion into the coconut. The portion of the pull tab 1 that surrounds the hole 3 makes up a depression 8, with a surrounding wall tilted inwards (i.e. a recessed surrounding portion) for the purpose of admitting the head 7 inside of it, thereby eliminating the possibility that the head 7 will come out of the surface plane of the pull tab 1 once coupled to the coconut.

In relation to Figure 2, a schematic perspective view of the pull tab 1 that was just described is seen, although it is seen from the lower face or the face intended to be in contact with the coconut. This representation shows the formation of a protrusion 9 projected from the surface of the aforementioned lower face and made up of means for gripping the surface of the coconut for the purpose of providing anti-rotation means forthe pull tab in the operating position thereof.

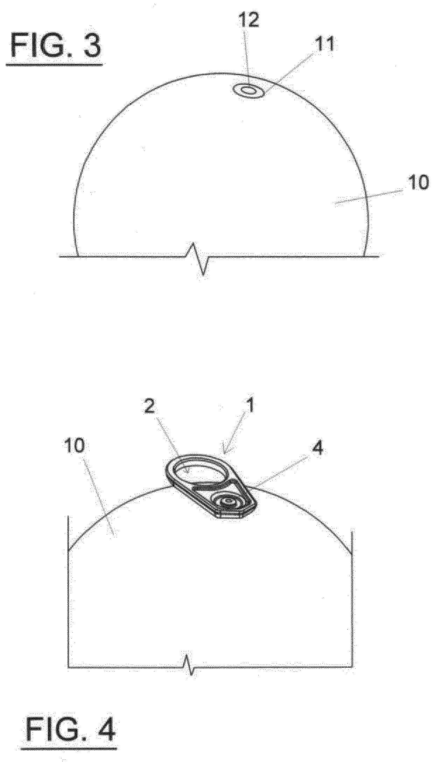

According to the previous explanation, the coconut to which the pull tab is coupled must be adequately prepared beforehand in order to receive the pull tab and enable it to carry out the function for which it was developed. Figure 3 shows an example of a coconut 10, which includes a pre-cut portion 11, in a generally circular shape, and a through hole 12 occupying the center of the pre-cut portion 11. As mentioned previously, the diameter of the through hole 12 is chosen such that the bolt4 can be inserted through it.

Thus, by inserting the frustoconical portion 5 of the end of the bolt4 inside the coconut through the hole 12 made in the shell of the coconut 10 by virtue of the elastic release of the portions 5a of said frustoconical portion 5, it causes, once completely introduced, the elastic recovery of said portions 5a to press against the coconut, thereby determining the fastening and self-retention of the pull tab in the operating position thereof. This condition is clearly shown in Figure 4 of the drawings, where it is seen thatthe pull tab 1 is finally arranged such that the manual gripping thereof by the consumer is facilitated, and where it is enough to pull on the pull tab with the help of the opening 2 so that the lever effect derived from said pull causes the pre-cut portion 11 of the coconut shell to break (Figure 3), and with this, the formation of an access towards the inside of the coconut 10. Furthermore, the position of the pull tab 1 is maintained thanks to the action exerted by the protrusion 9 (Figure 2) on the surface of the coconut 10 as explained previously.

Thus, the desired objective of only using organic, biodegradable material to make the pull tab of the invention in its entirety is met, removing with it the need for any metal element.

Furthermore, it must be clarified that although the general description has used a fresh coconut as an example of the fruit that is to be opened, this fact should not be understood as limiting, given that the pull tab that was just described can be likewise used with other fruits of an equivalent nature, which have a hard outer shell and are difficult to handle with conventional means.

It is notconsidered necessary to make the contents ofthe description more extensive so thata person skilled in the art can understand the scope thereof and the advantages deriving therefrom, as well as carry out the practical embodiment of the object thereof.

Not with standing the aforementioned, and given that the description above only corresponds to one preferred exemplary embodiment, it will be understood that within the essentiality thereof multiple detailed modifications and variations, likewise comprised within the scope of the invention defined by the appended claims, will be able to be introduced, and that in particular, they will may affect characteristics such as the shape, size or the manufacturing materials, or any and all others thatdo not alter the invention as described and as defined in the claims that follow.

## Claims

1. A pull tab with fastening and self-retaining means especially designed to carry out an operation to open a coconut(10) or equivalent fruit with a hard shell by means of breaking a pre-cut area (11) in a previously selected position of the shell of the coconut and by virtue of the joint between the pull ta b (1) a nd the shell of the coconut (10) through a through hole (12) made in a centered position in the aforementioned pre-cut area (11) in which the pull tab (1) has a substantially flattened shape and includes an opening (2) which facilitates the gripping thereof and that occupies the greater part of the surface thereof while on the opposite end the pull tab (1) comprises a fastening element housed in a through hole (3) being placeable between the body of the pull tab (1) and the coconut (10) **characterized in that** the aforementioned fastening element is placeable between the pull tab (1) and the pre-cut area (11) of the shell ofthe coconut and consists of a generally cylindrical bolt (4), dimensioned to be inserted through the aforementioned hole (12) of the shell of the coconut, the aforementioned bolt (4) being configured such that on the end inserted towards the inside ofthe coconut there is a frustoconical formation (5) with a larger diameter, on which slots (6) have been made coinciding with one or more diagonal planes, thereby determining portions (5a) by means of clips with elastic behavior, while on the end opposite from the frustoconical formation (5) the body of the bolt (4) it includes a substantially flat head (7), with a larger diameter than the body of the bolt, made up of stop means for when the bolt (4) is inserted into the through hole (12) made in the shell of the coconut (10).

2. The pull tab according to claim 1, characterized in thatthe face ofthe pull tab (1) intended to be in contact with the shell of the coconut (10) as a pull tab coupled to the coconut includes anti-rotation means consisting of a protrusion (9) projected from the surface of the contact face.

3. The pull tab according to claims 1 and 2, **characterized in that** it is made with an organic, biodegradable material based on coconut shells and natural resin.

## Patentansprüche

1. Aufreißlasche mit Befestigungs- und Selbsthaltemitteln, die speziell zum Öffnen einer Kokosnuss (10) oder einer gleichwertigen Frucht mit einer harten Schale durch Brechen eines vorgeschnittenen Bereichs (11) in einer zuvor ausgewählten Position bestimmt sind der Kokosnussschale und aufgrund der Verbindung zwischen der Zuglasche (1) und der Kokosnussschale (10) durch ein Durchgangsloch (12), das in einer zentrierten Position in dem zuvor genannten vorgeschnittenen Bereich (11) hergestellt ist bei dem die Zuglasche (1) eine im wesentlichen abgeflachte Form hat und eine Öffnung (2) aufweist, die das Greifen derselben erleichtert und die den grßeren Teil ihrer Oberfläche einnimmt, während die Zuglasche (1) am gegenüberliegenden Ende ein Befestigungselement aufweist untergebracht in einem Durchgangsloch (3), das zwischen dem Körper der Aufreißlasche (1) und der Kokosnuss (10) plazierbar ist, **dadurch gekennzeichnet, dass** das vorgenannte Befestigungselement zwischen der Aufreißlasche (1) und dem vorgeschnittenen Bereich (11) plazierbar ist) der Schale der Kokosnuss und besteht aus einem im Allgemeinen zylindrischen Bolzen (4), der so bemessen ist, dass er durch das vorgenannte Loch (12) der Kokosnussschale eingeführt werden kann, wobei der vorgenannte Bolzen (4) so konfiguriert ist, dass an dem Ende, das in Richtung der Innenseite der Kokosnuss eingeführt wird, eine kegelstumpfförmige Formation (5) mit größerem Durchmesser, bei dem die Schlitze (6) mit einer oder mehreren Diagonalen zusammenfallen, wodurch Abschnitte (5a) mittels Klammern mit elastischem Verhalten festgelegt werden, während an dem der kegelstumpfförmigen Formation (5) gegenüberliegenden Ende die Körper des Bolzens (4) enthält einen im wesentlichen flachen Kopf (7) mit einem größeren Durchmesser als der Körper des Bolzens, der aus Anschlagmitteln besteht, wenn der Bolzen (4) in die Durchgangsbohrung (12) eingesetzt wird in der Schale der Kokosnuss (10).

2. Aufreißlasche nach Anspruch 1, **dadurch gekennzeichnet, daß** die Fläche der Aufreißlasche (1), die als mit der Kokosnuss gekoppelte Aufreißlasche mit der Kokosnussschale (10) in Kontakt sein soll, eine Verdrehsicherung aufweist eines Vorsprungs (9), der von der Oberfläche der Kontaktfläche vorsteht.

3. Aufreißlasche nach den Ansprüchen 1 und 2, **dadurch gekennzeichnet, dass** sie aus einem organischen, biologisch abbaubaren Material auf Basis von Kokosnussschalen und Naturharz hergestellt ist.

## Revendications

1. Tirette munie de moyens de fixation et de retenue automatique spécialement conçue pour effectuer une opération d'ouverture d'une noix de coco (10) ou d'un fruit équivalent à coque dure au moyen de la rupture d'une zone prédécoupée (11) dans une position préalablement choisie de la coque de la noix de coco et grâce au joint entre la tirette (1) et la coque de la noix de coco (10), par un trou traversant (12) ménagé en position centrée dans la zone prédécoupée susmentionnée (11) dans lequel la tirette (1) a une forme sensiblement aplatie et comporte une ouverture (2) facilitant la préhension de celle-ci et occupant la majeure partie de sa surface tandis que l'extrémité opposée de la tirette (1) comprend un élément de fixation logé dans un trou traversant (3) pouvant être placé entre le corps de la tirette (1) et la noix de coco (10), **caractérisé en ce que** l'élément de fixation susmentionné peut être placé entre la tirette (1) et la zone prédécoupée (11) de la coque de la noix de coco et consiste en un corps généralement cylindrique un boulon (4), dimensionné pour être inséré à travers le trou susmentionné (12) de la coque de la noix de coco, ledit boulon (4) étant configuré de telle sorte que sur l'extrémité insérée vers l'intérieur de la noix de coco, une formation tronconique (5) de diamètre plus grand, sur lesquelles des fentes (6) ont été pratiquées coïncidant avec un ou plusieurs plans diagonaux, déterminant ainsi les parties (5a) au moyen de clips à comportement élastique, tandis que l'extrémité opposée à la formation tronconique (5) le corps du boulon (4) comprend une tête sensiblement plate (7), d'un diamètre plus grand que le corps du boulon, constitué de moyens de butée pour l'insertion du boulon (4) dans le trou traversant (12) dans la coquille de la noix de coco (10).

2. Tirette selon la revendication 1, **caractérisée en ce que** la face de la tirette (1) destinée à être en contact avec la coque de la noix de coco (10) en tant que tirette couplée à la noix de coco comporte des moyens anti-rotation constitués d'une saillie (9) projetée depuis la surface de la face de contact.

3. Tirette selon les revendications 1 et 2, **caractérisée en ce qu'**elle est constituée d'un matériau organique biodégradable à base de coquilles de noix de coco et de résine naturelle.
